# EUROPEAN PATENT APPLICATION

(11) **EP 4 663 999 A1**
(43) Date of publication of application: **17.12.2025**
(21) Application number: 24779195.7
(22) Date of filing: 06.03.2024
(51) Int. Cl.: F21S 2/00, G02B 5/02, G02F 1/1335, G02F 1/13357

(54) **LIGHT-DIFFUSING SHEET, BACKLIGHT UNIT, LIQUID CRYSTAL DISPLAY DEVICE, AND INFORMATION APPARATUS**

(30) Priority: 28.03.2023 JP 2023052234
(71) Applicant: KEIWA Incorporated, Tokyo 103-0025 (JP)
(72) Inventor: TSAI, Chengheng, Tokyo 103-0025 (JP)
(74) Representative: Kurig, Thomas
(86) International application number: PCT/JP2024/008460
(87) International publication number: WO 2024/203060

(57) **Abstract**

A plurality of substantially inverted quadrangular pyramid-shaped recesses 44c are provided on one surface of a light-diffusing sheet 44, and a plurality of linear structures 64 extending in a predetermined direction are provided on the other surface. The opening shapes of the plurality of recesses 44c are substantially quadrilateral shapes having a pair of opposing angles of 95° or more and 130° or less.

## Description

### Technical Field

The present disclosure relates to a light-diffusing sheet, a backlight unit, a liquid crystal display device, and an information apparatus.

### Background Art

Liquid crystal display devices (hereinafter, also referred to as liquid crystal displays) are widely used as display devices for various information apparatuses such as smartphones, tablet terminals, and virtual reality (VR) goggles. As a backlight for a liquid crystal display, an edge light-type system in which a light source is disposed near a side surface of a liquid crystal panel or a direct-type system in which the light source is disposed on the back surface of the liquid crystal panel are predominantly used.

An edge light-type backlight unit includes a light guide plate, a light source for inputting light into an end portion of the light guide plate, and an optical sheet laminated on the light guide plate (see Patent Literature 1). The optical sheet has functions such as changing the angle of the light from the light source and diffusing the light, and a plurality of optical sheets including a light-diffusing sheet may be used in combination.

### Citation List

### Patent Literature

Patent Literature 1: Japanese Patent Application Publication No. 2017-22059

### Summary of Invention

### Technical Problem

The light-diffusing sheet makes the brightness on the display screen more uniform by diffusing the light using diffusion generated by applying an uneven shape to the sheet surface or diffusion generated by dispersing fine particles having a different refractive index from that of a sheet base material through the sheet base material.

Conventionally, however, a problem arises in that when an attempt is made to improve the brightness uniformization ability of the light-diffusing sheet, the brightness itself decreases.

An object of the present disclosure is to provide a light-diffusing sheet capable of suppressing a reduction in brightness.

### Solution to Problem

To achieve the object described above, a light-diffusing sheet according to the present disclosure is a light-diffusing sheet having: a first surface that serves as a light emission surface; and a second surface that serves as a light entrance surface, wherein a plurality of recesses having inverted substantially square pyramid shape is provided on one of the first surface and the second surface, a plurality of linear structures extending in a predetermined direction is provided on the other of the first surface and the second surface, and an opening shape of each of the plurality of recesses is a substantially quadrilateral shape having pairs of opposing corners of 95° or more and 130° or less, respectively.

With the light-diffusing sheet according to the present disclosure, the brightness can be increased in comparison with a case in which the pairs of opposing corners of the substantially quadrilateral shape serving as the opening shape of the recess are less than 95° or more than 130°, respectively.

Note that in the present disclosure, the "light-diffusing sheet" is assumed to include a plate-form "light-diffusing plate" and a film-form "light-diffusing film".

In the light-diffusing sheet according to the present disclosure, when the pairs of corners are 100° or more and 120° or less, respectively, the brightness can be further increased.

In the light-diffusing sheet according to the present disclosure, when the substantially quadrilateral shape is substantially rhomboid, the light-diffusing sheet can be manufactured easily.

In the light-diffusing sheet according to the present disclosure, when the plurality of linear structures form a prism, a hairline, a lenticular, or a diffraction grating and the light-diffusing sheet is disposed in an edge light-type backlight unit, light emitted substantially parallel to a display screen from a light source provided on an end portion can be guided to the display screen.

A backlight unit according to the present disclosure is an edge light-type backlight unit incorporated into a liquid crystal display device in order to guide light emitted from a light source to a display screen, the backlight unit including: a light guide member, wherein the light source is provided on a side end of the light guide member, and the light-diffusing sheet according to present disclosure, described above, which is provided between the display screen and the light guide member, wherein the light-diffusing sheet is disposed such that the plurality of recesses face the display screen.

Since the backlight unit according to the present disclosure includes the light-diffusing sheet according to the present disclosure, described above, the brightness uniformity can be improved while suppressing a reduction in brightness.

In the backlight unit according to the present disclosure, when the light guide member is disposed on a reflective sheet provided on an opposite side to the display screen as viewed from the light-diffusing sheet, the brightness can be further increased.

In the backlight unit according to the present disclosure, when the longer of two diagonals of the substantially quadrilateral shape is substantially parallel to an emission direction of the light source, the brightness can be increased as compared with other arrangements.

In the backlight unit according to the present disclosure, when an extension direction of the plurality of linear structures is substantially parallel to an emission direction of the light source, light entering the light-diffusing sheet from the light guide member can be refracted toward the display screen at a more favorable angle than with other arrangements.

In the backlight unit according to the present disclosure, an angle formed by the longer of the two diagonals of the substantially quadrilateral shape and an emission direction of the light source may be 5° or more and 20° or less. Thus, even when the angle formed by the extension direction of the plurality of linear structures and the emission direction of the light source is set at 5° or more and 20° or less in order to suppress the occurrence of moire, the brightness can be increased as compared with other arrangements.

In the backlight unit according to the present disclosure, when an angle formed by an extension direction of the plurality of linear structures and an emission direction of the light source is 5° or more and 20° or less, the occurrence of moire can be suppressed and the brightness uniformity can be improved as compared with other arrangements.

In the backlight unit according to the present disclosure, when a brightness-enhancing sheet is provided between the display screen and the light-diffusing sheet, the brightness can be further increased.

A liquid crystal display device according to the present disclosure includes: the backlight unit according to the present disclosure, described above, and a liquid crystal display panel.

Since the liquid crystal display device according to the present disclosure includes the backlight unit according to the present disclosure, described above, the brightness uniformity can be improved while suppressing a reduction in brightness.

An information apparatus according to the present disclosure includes: the liquid crystal display device according to the present disclosure, described above.

Since the information apparatus according to the present disclosure includes the liquid crystal display device according to the present disclosure, described above, the brightness uniformity can be improved while suppressing a reduction in brightness.

Advantageous Effects of Invention

According to the technology of the present disclosure, it is possible to provide a light-diffusing sheet capable of suppressing a reduction in brightness, as well as a backlight unit, a liquid crystal display device, and an information apparatus using the light-diffusing sheet.

### Brief Description of Drawings

[FIG. 1] FIG. 1 is a schematic cross-sectional view showing an example of a liquid crystal display device according to an embodiment.
[FIG. 2] FIG. 2 is a schematic cross-sectional view and plan view illustrating a configuration of a backlight unit according to the embodiment.
[FIG. 3] FIG. 3 is a schematic cross-sectional view of a light-diffusing sheet according to the embodiment.
[FIG. 4] FIG. 4 is a perspective view showing an inverted pyramid layer of the light-diffusing sheet according to the embodiment.
[FIG. 5] FIG. 5 is a view illustrating the shape of the inverted pyramid layer of the light-diffusing sheet of the embodiment.
[FIG. 6] FIG. 6 is a view illustrating an opening shape of a recess in the inverted pyramid layer of the light-diffusing sheet of the embodiment.
[FIG. 7] FIG. 7 is a view illustrating the shape of a linear structure layer (in a case where the linear structures form prisms) of the light-diffusing sheet of the embodiment.
[FIG. 8] FIG. 8 is a cross-sectional view showing variations of the linear structure layer of the light-diffusing sheet of the embodiment, wherein (a) shows a case in which the linear structures form a hairline, (b) shows a case in which the linear structures form a lenticular, and (c) shows a case in which the linear structures form a diffraction grating.
[FIG. 9] FIG. 9 is a view illustrating a structure for suppressing moire in the light-diffusing sheet of the embodiment.
[FIG. 10] FIG. 10 is a view illustrating another structure for suppressing moire in the light-diffusing sheet of the embodiment.
[FIG. 11] FIG. 11 is a view showing results of examining changes in brightness occurring when the quadrilateral shape serving as the recess opening shape of the inverted pyramid layer of the light-diffusing sheet is changed in examples.

### Description of Embodiments

### (Embodiment)

A light-diffusing sheet, a backlight unit, a liquid crystal display device, and an information apparatus according to an embodiment will be described below with reference to the figures. It should be noted that the scope of the present disclosure is not limited to the embodiment described below, and any modifications can be made without departing from the scope of the technical concept of the present disclosure.

### <Liquid Crystal Display Device>

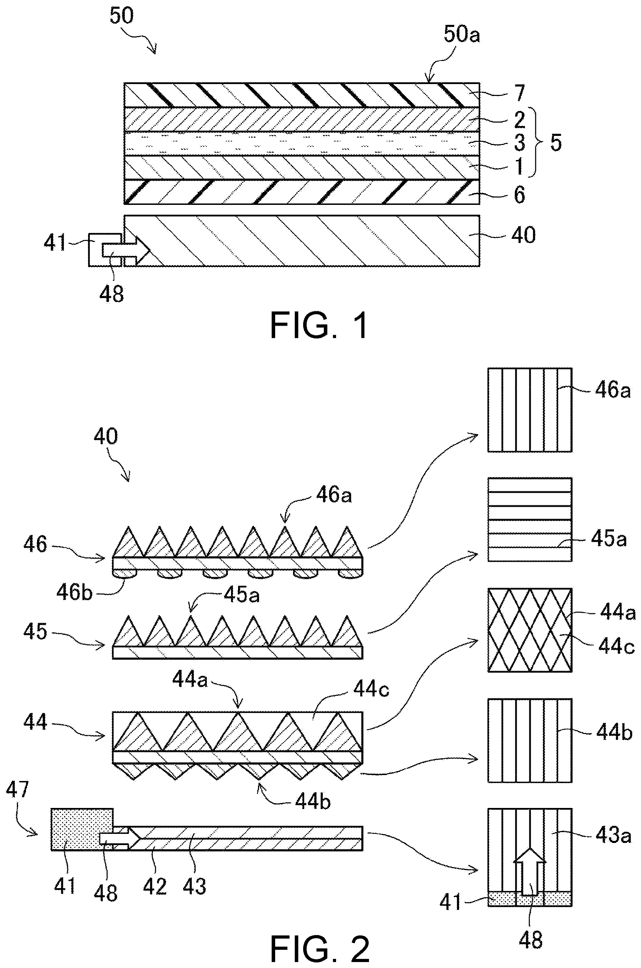

FIG. 1 is a schematic cross-sectional view showing an example of a liquid crystal display device 50 according to this embodiment.

As shown in FIG. 1, the liquid crystal display device 50 according to this embodiment includes a liquid crystal display panel 5, a first polarizing plate 6 adhered to a bottom surface of the liquid crystal display panel 5, a second polarizing plate 7 adhered to a top surface of the liquid crystal display panel 5, and a backlight unit 40 provided on a back surface side of the liquid crystal display panel 5 via the first polarizing plate 6.

The liquid crystal display panel 5 includes a TFT substrate 1 and a CF substrate 2 provided so as to face each other, and a liquid crystal layer 3 provided between the TFT substrate 1 and the CF substrate 2.

For example, the TFT substrate 1 includes a plurality of TFTs provided in a matrix pattern on a glass substrate, an interlayer insulating film provided so as to cover the TFTs, a plurality of pixel electrodes provided in a matrix pattern on the interlayer insulating film and respectively connected to the plurality of TFTs, and an alignment film provided so as to cover the pixel electrodes. For example, the CF substrate 2 includes a black matrix provided in a grid pattern on a glass substrate, a color filter including a red layer, a green layer, and a blue layer respectively provided between the grids of the black matrix, a common electrode provided so as to cover the black matrix and the color filter, and an alignment film provided so as to cover the common electrode. The liquid crystal layer 3 is constituted by a nematic liquid crystal material or the like containing liquid crystal molecules with electro-optic characteristics. For example, the first polarizing plate 6 and the second polarizing plate 7 include a polarizer layer with a polarization axis in one direction, and a pair of protective layers provided so as to sandwich the polarizer layer.

The backlight unit 40 is an edge light-type backlight unit that guides light 48 emitted substantially parallel to the liquid crystal display panel 5 from a light source 41 provided on an end portion toward the liquid crystal display panel 5.

The shape of a display screen 50a of the liquid crystal display device 50 as seen from the front (above in FIG. 1) is generally rectangular or square, but the shape is not limited thereto and may be any desired shape, such as a rectangular shape with rounded corners, an elliptical, circular, or trapezoidal shape, or the shape of an instrument panel for an automobile.

In the liquid crystal display device 50, a voltage of a predetermined magnitude is applied to the liquid crystal layer 3 in each sub-pixel corresponding to each pixel electrode in order to change the alignment state of the liquid crystal layer 3. Thus, the transmittance of light that enters from the backlight unit 40 through the first polarizing plate 6 is adjusted. The light having the adjusted transmittance is emitted through the second polarizing plate 7, whereby an image is displayed.

The liquid crystal display device 50 according to this embodiment is used as a display device incorporated into any of various information apparatuses (for example, an in-vehicle device for car navigation or the like, a personal computer, a mobile phone, a portable information terminal such as a laptop personal computer or a tablet, VR goggles, a portable game machine, a copy machine, a ticket vending machine, an automated teller machine, or the like).

### <Backlight Unit>

FIG. 2 shows an example configuration of the backlight unit 40 according to this embodiment.

As shown in FIG. 2 (the cross-sectional view on the left), the backlight unit 40 is constructed by laminating a surface light-emitting unit 47, a light-diffusing sheet 44, a first prism sheet 45, and a second prism sheet 46 in that order. While the respective constituent elements are shown spaced apart in FIG. 2, the constituent elements may be substantially in contact with each other in the backlight unit 40. Moreover, FIG. 2 shows the cross-sections of the respective constituent elements schematically, and some of the constituent elements may have a different cutting direction from the direction shown in the figure.

The first prism sheet 45 and the second prism sheet 46 concentrate the light from the surface light-emitting unit 47 toward the display screen 50a, thereby contributing to increased brightness over the entire surface of the liquid crystal display panel 5. Note that in order to make the prism sheets 45 and 46 function as a brightness-enhancing sheets, it is desirable for the light to enter the prism sheets 45 and 46 at an angle within a predetermined range.

Meanwhile, since the surface light-emitting unit 47 is an edge light-type unit having the light source 41 on an end portion thereof, the light emitted from the surface light-emitting unit 47 is emitted at an angle close to parallel to the display screen 50a. Accordingly, if the first and second prism sheets 45 and 46 are directly provided on the surface light-emitting unit 47, the angle at which the light enters the prism sheets 45 and 46 is not always a desirable angle, and this may cause a reduction in brightness.

Hence, in this embodiment, by deploying the light-diffusing sheet 44 between the surface light-emitting unit 47 and the first prism sheet 45 and providing a linear structure layer 63, described below, on the light entrance surface of the light-diffusing sheet 44, the light emitted from the surface light-emitting unit 47 is refracted toward the first prism sheet 45 such that the light enters the prism sheets 45 and 46 at a desired angle. Thus, the backlight unit 40 can realize uniform light emission with increased brightness.

The right-hand view of FIG. 2 schematically shows the planar configuration of each of the laminated constituent elements from the lamination direction (the vertical direction of the cross-sectional view on the left of FIG. 2). These plan views are shown in alignment with the orientation in which the respective constituent elements are actually laminated in the backlight unit 40. Although details of the individual constituent elements will be described below, the respective orientations of the laminated constituent elements are set as follows. First, the direction in which the light 48 is emitted from the light source 41, the extension direction of a lenticular lens 43a provided in the light guide plate 43 of the surface light-emitting unit 47, and the extension direction of prism ridge lines 44b provided in the linear structure layer 63 of the light-diffusing sheet 44 are parallel to each other. Further, the longer of two diagonals of a quadrilateral (rhomboid in this example) shape serving as the opening shape of a recess 44c provided in an inverted pyramid layer 62 of the light-diffusing sheet 44 and the prism ridge line 44b of the linear structure layer 63 are parallel to each other. Furthermore, prism ridge lines 45a of the first prism sheet 45 and prism ridge lines 46a of the second prism sheet 46 are orthogonal to each other, and the prism ridge lines 45a and the prism ridge lines 44b of the linear structure layer 63 of the light-diffusing sheet 44 are orthogonal to each other.

It should be noted that the terms "parallel" and "orthogonal" in the present disclosure include, in addition to geometrically strictly parallel and orthogonal, cases that may be regarded as substantially parallel or orthogonal with the range of industrial error or a range in which the actions and effects of the technology of the present disclosure are not lost. In other words, it is permissible for an angle formed by two directions to be offset from 0° (when parallel) or 90° (when orthogonal). The acceptable degree of the "offset" is 10° or less, preferably 5° or less, more preferably 3° or less, and even more preferably 1° or less.

The constituent elements of the backlight unit 40 will be described in detail below.

### <Surface Light-Emitting Unit>

The surface light-emitting unit 47 includes a reflective sheet 42 serving as a reflective member, the light guide plate 43, which serves as a light guide member laminated on the reflective sheet 42, and the light source 41, which is provided on a side end of the light guide plate 43. The light source 41, the reflective sheet 42, and the light guide plate 43 may be housed in close contact with each other inside a frame body without being adhered to each other. The light source 41 causes the light 48 to enter the light guide plate 43 substantially parallel to the surface of the light guide plate 43. The light guide plate 43 guides the light 48 in the opposite direction to the light source 41 and emits the light toward the light-diffusing sheet 44 at a relatively small angle with respect to the surface of the light guide plate 43. The reflective sheet 42 reflects the light emitted from the light-diffusing sheet 44 in the opposite direction so as to direct the light to the light-diffusing sheet 44.

The reflective sheet 42 is made of, for example, a white polyethylene terephthalate resin film, a silver vapor-deposited film, or the like. The light guide plate 43 may be a lenticular lens sheet made of, for example, polycarbonate, polyethylene terephthalate, acrylic resin or the like. In this case, each of the lenticular lenses 43a (see the plan view of FIG. 2) preferably extends in the direction in which the light 48 enters. Since the light 48 is emitted from the light source 41 with a constant spread, the direction in which the light 48 enters is the direction in which the center of the light 48 emitted from the light source 41 advances, for example a direction perpendicular to the side end surface of the light guide plate 43 on which the light source 41 is provided.

The planar shape of the light guide plate 43 may be basically square, or may be an octagon with beveled corners. The light guide plate 43 may have an end side of, for example, around several cm, and a plurality of light sources 41 may be arranged in a row along the end side.

The type of the light source 41 is not particularly limited, and for example, the light source 41 may be an LED element, a laser element, or the like. From the perspectives of cost, productivity, and so on, an LED element may be used. When an LED element is used, a plurality of LED chips may be included. The light source 41 may be a white light source. When a colored light source such as a blue light source is used, a color conversion sheet is disposed in the backlight unit 40 in addition to the light-diffusing sheet 44 and the prism sheets 45 and 46.

### <Light-Diffusing Sheet>

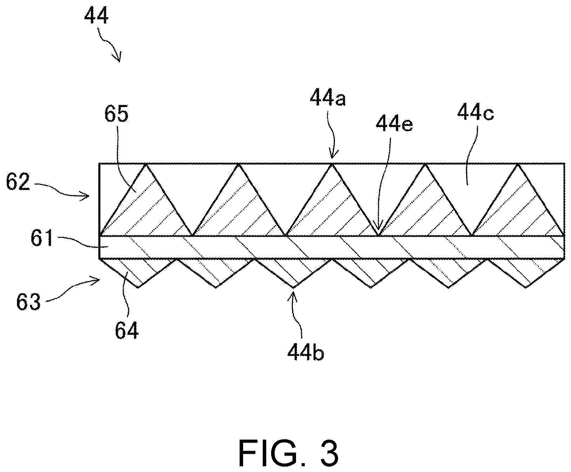

As shown in FIGs. 2 and 3, a plurality of recesses 44c formed in a inverted substantially square pyramid shape are provided on a first surface (the light emission surface in this example) of the light-diffusing sheet 44, and a plurality of linear structures 63 formed adjacent to each other and having an isosceles triangle-shaped cross-section are provided on a second surface (the light entrance surface in this example). In the example shown in FIG. 3, the light-diffusing sheet 44 includes a base material layer 61, the inverted pyramid layer 62 provided on one surface of the base material layer 61, and the linear structure layer 63 provided on the other surface of the base material layer 61. In this example, the linear structure layer 63 is disposed so as to face the surface light-emitting unit 47. The overall thickness of the light-diffusing sheet 44 may be, for example, around 50 µm or more and around 300 µm or less.

### [Base Material Layer]

The base material layer 61 is required to transmit light rays and is therefore formed using a transparent (for example, colorless and transparent) synthetic resin as a main component. The main component of the base material layer 61 is not particularly limited, and for example, polycarbonate, polyethylene terephthalate, polyethylene naphthalate, acrylic resin, polystyrene, polyolefin, cellulose acetate, weather-resistant polyvinyl chloride, or the like may be used. It should be noted that the term "main component" refers to the component with the largest content, for example a component with a content of 50% by mass or more. The base material layer 61 may contain a diffusing agent and other additives, or may be substantially free of additives. The additives that may be included are not particularly limited, but may be inorganic particles of silica, titanium oxide, aluminum hydroxide, barium sulfate, and so on, for example, or organic particles of acrylic, acrylonitrile, silicone, polystyrene, polyamide, and so on, for example.

The lower limit of the average thickness of the base material layer 61 is preferably around 10 µm, more preferably around 35 µm, and even more preferably around 50 µm. The upper limit of the average thickness of the base material layer 61 is preferably around 500 µm, more preferably around 250 µm, and even more preferably around 180 µm. When the average thickness of the base material layer 61 is less than the lower limit, there is a risk of curling occurring when the inverted pyramid layer 62 and the linear structure layer 63 are formed. Conversely, when the average thickness of the base material layer 61 exceeds the upper limit, the brightness of the liquid crystal display device 50 may decrease, and it may become difficult to respond to demand to make the liquid crystal display device 50 thinner. It should be noted that term "average thickness" refers to an average value of the thickness at any ten points.

### [Inverted Pyramid Layer]

The inverted pyramid layer 62 is provided with the plurality of recesses 44c having an uneven shape, in this example a inverted substantially square pyramid shape (an inverted pyramid shape), for diffusing light. The inverted pyramid layer 62 is required to transmit light rays and may therefore be formed using a transparent (for example, colorless and transparent) synthetic resin as the main component. The inverted pyramid layer 62 may be molded integrally with the base material layer 61 during extrusion molding of a base material resin forming the base material layer 61, or may be molded separately using a UV-curable resin or the like after molding the base material layer 61.

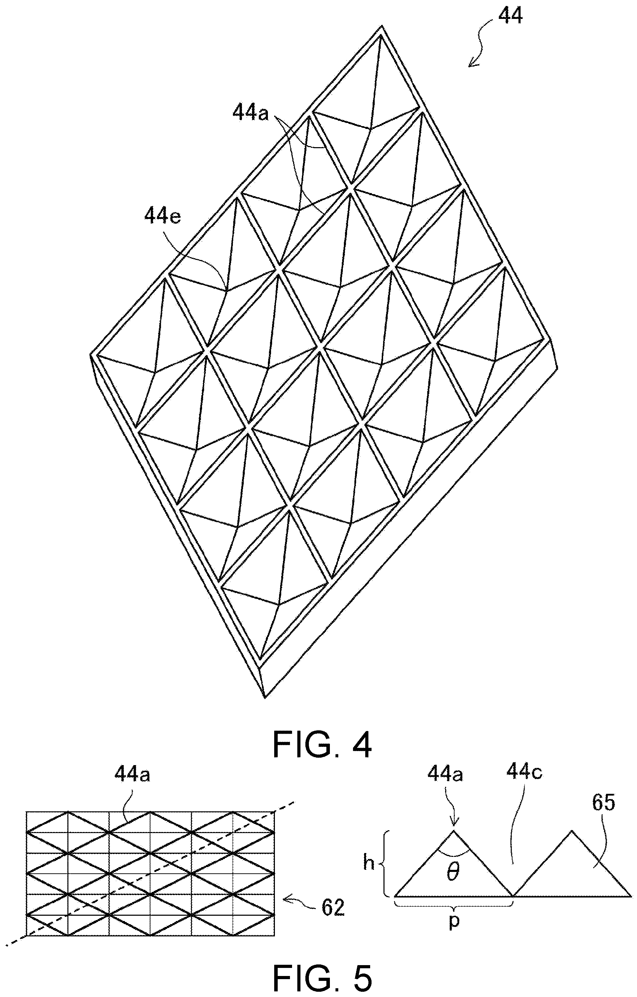

As shown in FIG. 4, for example, the plurality of recesses 44c may be arranged in a two-dimensional matrix pattern. Adjacent recesses 44c are partitioned by ridge lines 44a. The ridge lines 44a extend along the arrangement direction of the recesses 44c. The arrangement pitch of the recesses 44c may be, for example, around 50 µm or more and around 500 µm or less. A center 44e of the recess 44c (the apex of the inverted pyramid forming the deepest part) is the deepest part of the recess 44c. The center 44e of the recess 44c may reach the surface of the base material layer 61. In other words, the depth of the recess 44c may be set to be equal to the thickness of the inverted pyramid layer 62. Note that although FIG. 4 illustrates a state in which the recesses 44c are arranged in a 4×4 matrix pattern for the sake of simplicity, the actual number of arranged recesses 44c is significantly larger.

FIG. 5 shows the shape of the inverted pyramid layer 62. FIG. 5 shows a plan view of the inverted pyramid layer 62 and a cross-sectional view parallel to one ridge line 44a and passing through the center 44e of the recess 44c (the position of the cross-section is represented by a dotted line on the plan view). In the cross-section, a remaining portion 65 from which the recess 44c has been removed is triangular, and a side contacting the base material layer 61 is the bottom side.

The height h of the remaining portion 65 (the depth of the recess 44c) may be around 10 µm or more and around 200 µm or less. The pitch p of the remaining portions 65 (the arrangement pitch of the recesses 44c) may be around 20 µm or more and around 400 µm or less. The apex angle θ of the remaining portion 65 may be around 60° or more and around 150° or less.

In this embodiment, the inverted pyramid-shaped (inverted substantially square pyramid-shaped) recesses 44c are arranged in a two-dimensional matrix pattern so as to provide an uneven shape, but the recesses 44c may be arranged randomly as long as the actions and effects of the technology of the present disclosure are not lost. In this example, the recesses 44c are regularly arranged two-dimensionally without gaps, but instead, for example, the ridge lines 44a may be formed to be wide such that gaps are provided between the recesses 44c.

Although the expression "inverted substantially square pyramid" is used in the present disclosure in consideration of the fact that it is difficult to form recesses in a geometrically strict inverted square pyramid shape using ordinary shape transfer techniques, it is assumed that the expression "inverted substantially square pyramid" includes shapes that can be regarded as a truly or inverted substantially square pyramid. In addition, the term "substantially" means "can be approximated" such that, for example, a "inverted substantially square pyramid" refers to a shape that can approximate an inverted square pyramid. For example, as long as the actions and effects of the technology of the present invention are not lost, an "inverted square truncated pyramid" having a flat top is also assumed to be included as a "inverted substantially polygonal pyramid". Furthermore, shapes that are deformed from an "inverted square pyramid" within the range of inevitable shape variability due to machining accuracy in industrial production are also assumed to be included as a "inverted substantially square pyramid".

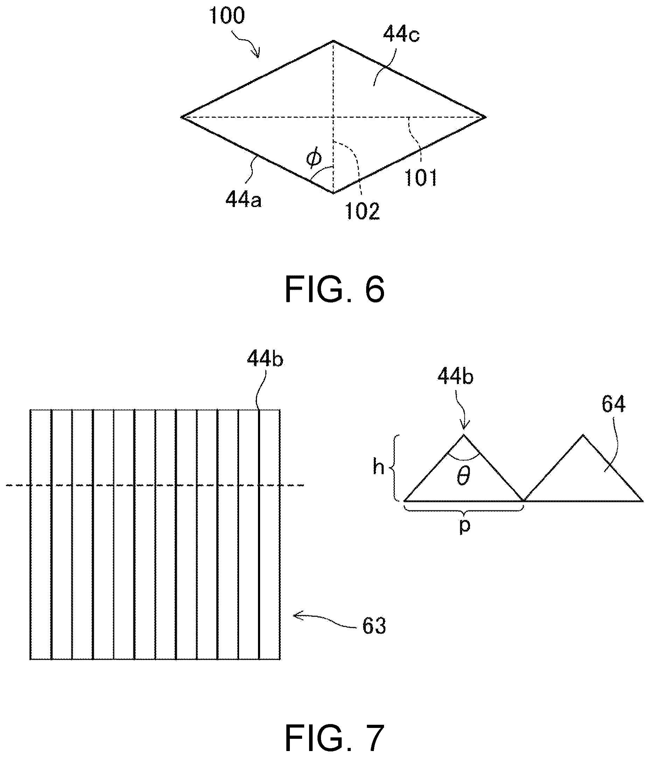

As one of the features of this embodiment, the opening shape of the recess 44c is a substantially quadrilateral (for example, rhomboid) shape having pairs of opposing corners of respectively 95° or more and 130° or less, and preferably 100° or more and 120° or less, respectively. The opening shape of the recess 44c is a shape surrounded by the ridge lines 44a of the recess 44c. In the example shown in FIG. 6, the quadrilateral shape serving as the opening shape of the recess 44c is a rhombus 100. The rhombus 100 has a long diagonal (hereinafter, also referred to as the long axis) 101 and a short diagonal (hereinafter, also referred to as the short axis) 102. As described above, in this example, the recesses 44c are arranged such that the long axis 101 of the rhombus 100 is substantially parallel to the prism ridge lines 44b of the linear structure layer 63, or in other words the direction in which the light 48 is emitted from the light source 41. An angle *ϕ* formed by the short axis 102 and the ridge line 44a in the rhombus 100 is 47.5° or more and 65° or less, and preferably 50° or more and 60° or less. The rhombus 100 does not have to be a true rhombus as long as the angle *ϕ* is within the above angle range. For example, depending on the light emission characteristics of the surface light-emitting unit 47, a quadrilateral shape that is asymmetric with respect to the long axis 101 or the short axis 102 may be used.

Although the expression "substantially quadrilateral" or "substantially rhomboid" is used in the present disclosure in consideration of the fact that it is difficult to form recesses having geometrically strict quadrilateral or rhomboid openings using ordinary shape transfer techniques, it is assumed that the expression "substantially quadrilateral" or "substantially rhomboid" includes shapes that can be regarded as truly or substantially quadrilateral or rhomboid. In addition, the term "substantially" means "can be approximated" such that, for example, "substantially quadrilateral" or "substantially rhomboid" refers to a shape that can approximate a quadrilateral or rhomboid shape. For example, a quadrilateral or rhomboid shape with missing or rounded corners is also assumed to be encompassed by "substantially quadrilateral" or "substantially rhomboid", providing that the actions and effects of the technology of the present disclosure are not lost. Furthermore, shapes deformed from a quadrilateral or rhomboid shape within the range of inevitable shape variability due to machining accuracy in industrial production are also assumed to be encompassed by "substantially quadrilateral" or "substantially rhomboid".

Note that a corner formed by oblique sides of the recess 44c in a cross-section that appears when the recess 44c is cut along the long axis 101 of the rhombus 100 on a plane (a vertical cross-section) perpendicular to a placement surface (a horizontal plane) of the light-diffusing sheet 44 is preferably 110° or more and 135° or less, and more preferably 113° or more and 128° or less Thus, an effect of improving the brightness can be obtained.

### [Linear Structure Layer]

In the linear structure layer 63 of this example, a plurality of groove lines having an isosceles triangle-shaped cross-section are provided adjacent to each other, and linear structures (prisms in this example) 64 are formed by triangular column parts sandwiched between adjacent pairs of groove lines. The linear structure layer 63 is formed using, for example, a UV-curable acrylic resin.

As noted above, the prism ridge lines 44b of the linear structures 64 are disposed so as to extend in the extension direction of the lenticular lens 43a of the surface light-emitting unit 47, that is, in the same direction as the direction in which the light 48 is emitted from the light source 41.

FIG. 7 shows the shapes of the linear structure layer 63 and the linear structure 64. FIG. 7 shows a plan view of the linear structure layer 63 and a cross-sectional view perpendicular to the prism ridge line 44b (the position of the cross-section is represented by a dotted line on the plan view). The cross-sectional shape of the prism forming each linear structure 64 is an isosceles triangle, and the side that contacts the base material layer 61 is the bottom side.

The height h of the linear structure 64 may be around 8 µm or more and around 100 µm or less. The pitch p of the linear structures 64 may be around 15 µm or more and around 200 µm or less. The apex angle θ of the linear structure 64 is preferably around 60° or more and around 120° or less, and more preferably around 80° or more and around 100° or less.

Note that in the example shown in FIG. 7, the cross-sectional shape of the linear structure 64 is shown as a geometrically strict isosceles triangle, and adjacent linear structures 64 are shown to be in contact with each other. However, the cross-sectional shape of the linear structure 64 may differ from the exemplified shape, provided that the actions and effects of the technology of the present disclosure are not lost, or within the range of inevitable shape variability due to machining accuracy in industrial production. For example, the apex (the prism ridge line 44b) may be rounded or may have a flat trapezoidal shape. In this case, the apex angle θ is the intersection angle when sides extending from both ends of the bottom side are extended, envisaging a triangular shape. Moreover, adjacent linear structures 64 may be disposed with a gap therebetween.

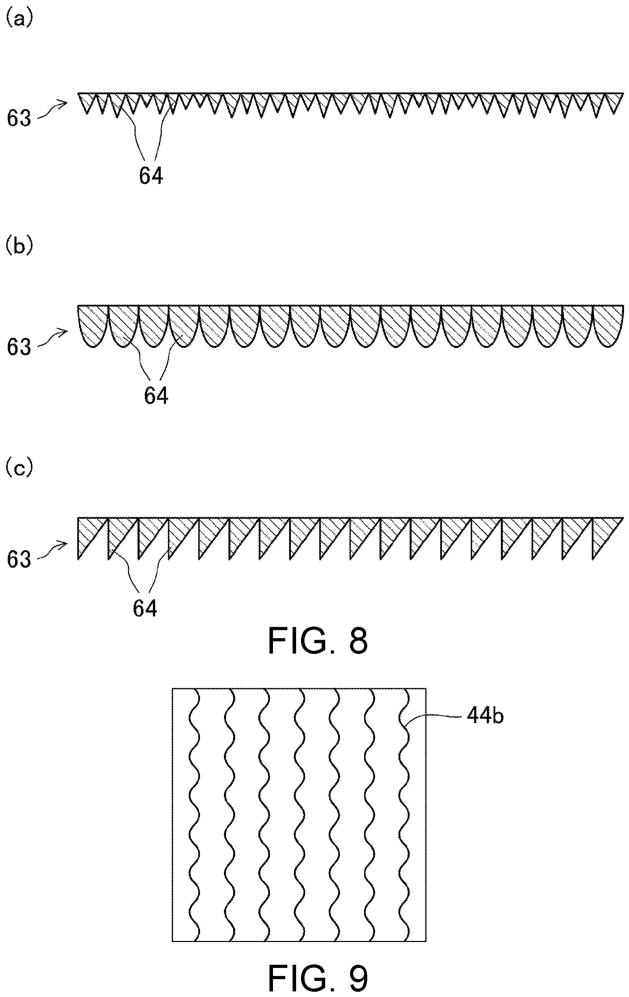

Furthermore, in the example shown in FIG. 7, prisms are provided as the linear structures 64, but the linear structure 64 is not particularly limited as long as it includes a convex body extending in a predetermined direction. For example, as shown in FIG. 8, the linear structures 64 may form a hairline ((a) in FIG. 8), a lenticular ((b) in FIG. 8), a diffraction grating ((c) in FIG. 8), or the like. The hairline forming the linear structures 64 may be, for example, elongated strips created by polishing the surface of the base material layer 61 in a single direction. The lenticular forming the linear structures 64 may be, for example, fine, elongated, kamaboko-shaped convex lens bodies provided on the surface of the base material layer 61. The diffraction grating forming the linear structure 64 may be, for example, a grating pattern constituted by linear protrusions and recesses periodically juxtaposed on the surface of the base material layer 61.

In all shapes of the linear structure 64, including the prisms of this example, when the extension direction of the linear structures 64 is substantially parallel to the emission direction of the light source 41, the light entering the light-diffusing sheet 44 from the light guide plate 43 can be refracted toward the prism sheets 45 and 46 at a more favorable angle than with other arrangements.

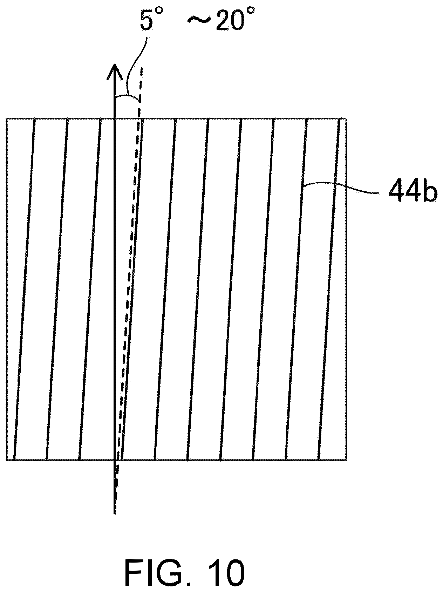

Incidentally, in the backlight unit 40 of this embodiment, moire may occur on the light emission surface, resulting in a reduction in the brightness uniformity. FIGs. 9 and 10 show variations of the linear structure layer 63 for suppressing this. With the configurations shown in FIGs. 9 and 10, the occurrence of moire can be suppressed, and the brightness uniformity can be improved. Note that since moire occurs due to dimensional relationships between constituent elements such as, for example, the surface light-emitting unit 47, the light guide plate 43, and the light-diffusing sheet 44, and so on, the configurations shown in FIGs. 9 and 10 may be unnecessary.

In FIG. 9, on the linear structure layer 63 of the light-diffusing sheet 44, the groove lines and the linear structures (the prisms) 64 left by the groove lines are formed in a repeatedly bent wave shape. As a result, the prism ridge lines 44b also become wave-shaped.

In FIG. 10, the extension direction of the groove lines and the linear structures 64 (the prism ridge lines 44b) is not parallel to the emission direction of the light 48 in the surface light-emitting unit 47 (indicated by an arrow in the figure), and instead takes an angle of around 5° to around 20°, for example. With the configuration shown in FIG. 10, in comparison with the configuration shown in FIG. 2 or the like, the linear structure layer 63 is disposed on the base material layer 61 so as to be rotated by a slight angle (5° to 20°, for example) using the sheet normal direction as a central axis. In this case, in the inverted pyramid layer 62 of the light-diffusing sheet 44, if the extension direction of the long axis 101 of the rhombus 100 also takes an angle of around 5° to around 20°, for example, relative to the emission direction of the light 48, similarly to the extension direction of the prism ridge lines 44b, the brightness can be improved as compared with other arrangements.

### <Method for Manufacturing Light-Diffusing Sheet>

The method for manufacturing the light-diffusing sheet 44 is not particularly limited, but for example, the light-diffusing sheet 44 can be manufactured using any of the manufacturing methods described below.

In a first manufacturing method, first, a pellet-form base material resin (plastic resin) is formed into a resin film by an extrusion molding machine. Next, using a roll having convex pyramid shapes on the surface thereof as one of two metal rolls and using a roll having a plurality of linear recessed shapes extending in a predetermined direction on the surface thereof as the other roll, the light-diffusing sheet 44 having inverted pyramid shapes (the recesses 44c) on one surface and linear convex shapes (the linear structures 64) on the other surface is manufactured by pressing the two rolls onto the resin film. In this manufacturing method, the base material layer 61, the inverted pyramid layer 62, and the linear structure layer 63 are formed integrally.

In a second manufacturing method, first, a pellet-form base material resin (plastic resin) is formed into a resin film by an extrusion molding machine. Next, using a roll having convex pyramid shapes on the surface thereof as one of two metal rolls and using a mirror surface roll as the other roll, a sheet having inverted pyramid shapes (the recesses 44c) on one surface and a mirror surface on the other surface (a sheet in which the base material layer 61 and the inverted pyramid layer 62 are integrated) is manufactured by pressing the two rolls onto the resin film. Next, while feeding this sheet between a pair of pressing rolls, a UV-curable resin (a resin composition for forming protrusions) is supplied to the back surface of the base material layer 61 immediately before the pair of pressing rolls. In this case, a pressing roll having a plurality of linear recesses extending in a predetermined direction on the outer peripheral surface thereof is used as the pressing roll on the side that comes into contact with the UV-curable resin. After pressing the pair of pressing rolls onto the sheet to which the UV-curable resin has been supplied, the UV-curable resin is cured by UV irradiation, whereby a plurality of linear protrusions (the linear structures 64), which are inverted shapes of the plurality of linear recesses, are transferred onto the opposite surface side of the sheet to which the inverted pyramid shapes (the recesses 44c) have been applied. In this manufacturing method, only the linear structure layer 63 is formed separately.

In a third manufacturing method, first, a pellet-form base material resin (plastic resin) is formed into a resin film by an extrusion molding machine. Next, using a roll having a plurality of linear recesses extending in a predetermined direction on the surface thereof as one of two metal rolls and using a mirror surface roll as the other roll, a sheet having a plurality of linear protrusions (the linear structures 64), which are inverted shapes of the plurality of linear recesses, on one surface and having a mirror surface on the other surface (a sheet in which the base material layer 61 and the linear structure layer 63 are integrated) is manufactured by pressing the two rolls onto the resin film. Next, while feeding this sheet between a pair of pressing rolls, an ultraviolet-curing resin (a resin composition for forming protrusions) is supplied to the front surface side of the base material layer 61 immediately before the pair of pressing rolls. In this case, a pressing roll having a plurality of substantially square pyramid-shaped protrusions on the outer peripheral surface thereof is used as the pressing roll on the side that comes into contact with the UV-curable resin. After pressing the pair of pressing rolls onto the sheet to which the UV-curable resin has been supplied, the UV-curable resin is cured by UV irradiation, whereby a plurality of inverted pyramid shapes (the recesses 44c), which are inverted shapes of the plurality of substantially square pyramid-shaped protrusions, are transferred onto the opposite surface of the sheet to which the plurality of linear protrusions (the linear structures 64) have been applied. In this manufacturing method, only the inverted pyramid layer 62 is formed separately.

In a fourth manufacturing method, first, the base material layer 61 having polyethylene terephthalate, for example, as the main component is prepared. While feeding the base material layer 61 between a pair of first pressing rolls, a first UV-curable resin (a resin composition for forming protrusions) is supplied to the back surface side of the base material layer 61 immediately before the pair of first pressing rolls. In this case, a pressing roll having a plurality of linear recesses extending in a predetermined direction on the outer peripheral surface thereof is used as the first pressing roll on the side that comes into contact with the first UV-curable resin. After pressing the pair of first pressing rolls onto the base material layer 61 to which the first UV-curable resin has been supplied, the first UV-curable resin is cured by UV irradiation, whereby a sheet with a plurality of linear protrusions (the linear structures 64), which are inverted shapes of the plurality of linear recesses, transferred onto the back surface side of the base material layer 61 (a sheet in which the base material layer 61 and the linear structure layer 63 are laminated) is manufactured. Next, while feeding this sheet between a pair of second pressing rolls, a second ultraviolet-curing resin (a resin composition for forming protrusions) is supplied to the front surface side of the sheet, to which the plurality of linear protrusions (the linear structures 64) have been transferred, immediately before the pair of second pressing rolls. A pressing roll having a plurality of substantially square pyramid-shaped protrusions on the outer peripheral surface thereof is used as the second pressing roll on the side that comes into contact with the second UV-curable resin. After pressing the pair of second pressing rolls onto the sheet to which the second UV-curable resin has been supplied, the second UV-curable resin is cured by UV irradiation, whereby a plurality of inverted pyramid shapes (the recesses 44c), which are inverted shapes of the plurality of substantially square pyramid-shaped protrusions, are transferred onto the opposite surface side of the sheet to which the plurality of linear protrusions (the linear structures 64) have been applied. In this manufacturing method, the base material layer 61, the inverted pyramid layer 62, and the linear structure layer 63 are each formed separately.

In a fifth manufacturing method, first, a pellet-form base material resin (plastic resin) is formed into a resin film by an extrusion molding machine. Next, using a metal flat plate having convex pyramid shapes on the surface thereof as one of two metal flat plates and using a metal flat plate having a plurality of linear recessed shapes extending in a predetermined direction on the surface thereof as the other metal flat plate, the light-diffusing sheet 44 having inverted pyramid shapes (the recesses 44c) on one surface and linear convex shapes (the linear structures 64) on the other surface is manufactured by pressing the two metal flat plates onto the resin film. In this manufacturing method, the base material layer 61, the inverted pyramid layer 62, and the linear structure layer 63 are formed integrally.

### <Prism Sheets>

In the example shown in FIG. 2, the first prism sheet 45 and the second prism sheet 46 are provided on the light-diffusing sheet 44 as brightness-enhancing sheets. On the prism sheets 45 and 46, a plurality of groove lines with an isosceles triangle-shaped cross-section are provided adjacent to each other, and prisms are formed from triangular column parts sandwiched between adjacent pairs of groove lines. A PET (polyethylene terephthalate) film in which prism shapes are formed using a UV-curable acrylic resin, for example, may be used as the prism sheets 45 and 46.

As shown on the cross-sectional views of FIG. 2, on both the first and second prism sheets 45 and 46, the prisms are disposed in the opposite direction to the surface light-emitting unit 47.

As shown on the plan views of FIG. 2, the first prism sheet 45 is disposed such that the prism ridge lines 45a thereof are orthogonal to the prism ridge lines 44b of the light-diffusing sheet 44, and the second prism sheet 46 is disposed such that the prism ridge lines 46a thereof are parallel to the prism ridge lines 44b of the light-diffusing sheet 44. Accordingly, the first and second prism sheets 45 and 46 are disposed such that the respective prism ridge lines 45a and 46a thereof are orthogonal to each other. A plurality of protrusions 46b may be provided on the back surface of the second prism sheet 46 (the surface opposite to the surface on which the prisms are provided) in order to prevent the occurrence of moire, visual recognition of foreign matter, and so on.

Note that instead of using the two prism sheets 45 and 46 described above as brightness-enhancing sheets, one, three, or more prism sheets may be used, or a brightness-enhancing sheet of a type different from that of the prism sheets may be used.

### <Features of Embodiment>

According to the light-diffusing sheet 44 of this embodiment, described above, the plurality of recesses 44c having inverted substantially square pyramid shape is provided on one surface, the plurality of linear structures 64 extending in a predetermined direction is provided on the other surface, and the opening shape of each of the recesses 44c is formed in a substantially quadrilateral shape in which the pairs of opposing corners are 95° or more and 130° or less, respectively. Thus, the brightness can be increased in comparison with a case in which the pairs of opposing corners of the substantially quadrilateral shape serving as the opening shape of the recess 44c are less than 95° or more than 130°, respectively.

In the light-diffusing sheet 44 of this embodiment, when the pairs of corners are respectively 100° or more and 120° or less, the brightness can be further increased.

In the light-diffusing sheet 44 of this embodiment, when the opening shape of the recess 44c is substantially rhomboid, the light-diffusing sheet 44 can be manufactured easily.

In the light-diffusing sheet 44 of this embodiment, when the linear structures 64 form a prism, a hairline, a lenticular, or a diffraction grating, and the light-diffusing sheet 44 is disposed in the edge light-type backlight unit 40, light emitted substantially parallel to the display screen 50a from the light source 41 can be guided to the display screen 50a.

The edge light-type backlight unit 40 of this embodiment is incorporated into the liquid crystal display device 50 in order to guide the light emitted from the light source 41 to the display screen 50a. The backlight unit 40 includes the light guide plate 43 having the light source 41 provided on a side end thereof, and the light-diffusing sheet 44, which is provided between the display screen 50a and the light guide plate 43, the light-diffusing sheet 44 being disposed with the recesses 44c facing the display screen 50a.

Since the backlight unit 40 of this embodiment includes the light-diffusing sheet 44, the brightness uniformity can be improved while suppressing a reduction in brightness.

In the backlight unit 40 of this embodiment, when the light guide plate 43 is disposed on the reflective sheet 42 provided on the opposite side to the display screen 50a as viewed from the light-diffusing sheet 44, the brightness can be further increased.

In the backlight unit 40 of this embodiment, when the longer diagonal 101 of the two diagonals 101 and 102 of the substantially quadrilateral shape serving as the opening shape of the recess 44c is substantially parallel to the emission direction of the light source 41, the brightness can be increased as compared with other arrangements.

In the backlight unit 40 of this embodiment, when the extension direction of the linear structures 64 and the emission direction of the light source 41 are substantially parallel, light entering the light-diffusing sheet 44 from the light guide plate 43 can be refracted toward the display screen 50a at a more favorable angle than with other arrangements.

In the backlight unit 40 of this embodiment, the angle formed by the longer diagonal 101 of the two diagonals 101 and 102 of the substantially quadrilateral shape serving as the opening shape of the recess 44c and the emission direction of the light source 41 may be 5° or more and 20° or less. Thus, even when the angle formed by the extension direction of the linear structures 64 and the emission direction of the light source 41 is set at 5° or more and 20° or less in order to suppress the occurrence of moire, the brightness can be increased as compared with other arrangements.

In the backlight unit 40 of this embodiment, when the angle formed by the extension direction of the linear structures 64 and the emission direction of the light source 41 is 5° or more and 20° or less, the occurrence of moire can be suppressed and the brightness uniformity can be improved as compared with other arrangements.

In the backlight unit 40 of this embodiment, when a brightness-enhancing sheet (in this example, the prism sheets 45 and 46) is provided between the display screen 50a and the light-diffusing sheet 44, the brightness can be further increased.

Since the liquid crystal display device 50 according to this embodiment includes the backlight unit 40, the brightness uniformity can be improved while suppressing a reduction in brightness. The same is true for various information apparatuses provided with the liquid crystal display device 50.

### <Example>

In an example, sheets on which the angle *ϕ* shown in FIG. 6 was changed from 5° to 85° in increments of 5° were prepared as evaluation samples of the light-diffusing sheet 44, and the brightness of each sample sheet was evaluated in a configuration basically identical to that of the backlight unit 40 shown in FIG. 2.

More specifically, the thickness of the base material layer 61 of the light-diffusing sheet 44 was set at 82 µm, the inverted pyramid layer 62 was provided on one surface of the base material layer 61, and the linear structure layer 63 was provided on the other surface.

The depth of the recesses 44c (the height of the remaining portions 65) in the inverted pyramid layer 62 was set at 20 µm, and the extension direction of the diagonal corresponding to the long axis 101 shown in FIG. 6 was aligned with the emission direction of the light source 41. Note that the inverted pyramid shape of the recesses 44c was formed by preparing prisms with a height of 20 µm and a pitch of 40 µm (i.e., an apex angle of 90°) and combining the prisms so as to intersect at an angle 2 *ϕ* of twice the angle *ϕ* shown in FIG. 6. Accordingly, in the opening shape of the recess 44c of each sample sheet (see FIG. 6), the lengths of the diagonals corresponding to the long axis 101 and the short axis 102 varied according to the angle *ϕ*, and more specifically, "length of diagonal corresponding to long axis 101" = 2 × (depth 20 µm)/cos *ϕ* = 40/cos *ϕ* [µm], and "length of diagonal corresponding to short axis 102" = 2 × (depth 20 µm)/sin *ϕ* = 40/sin *ϕ* [µm].

Prisms with an apex angle of 90° and a height of 12 µm were provided as the linear structures 64 of the linear structure layer 63, and the extension direction of the prism ridge lines 44b was aligned with the emission direction of the light source 41.

A sheet on which the light entrance surface of a base material layer with a thickness of 66 µm was formed as a mirror surface and prisms having an apex angle of 90° and a height of 12 µm were provided on the light emission surface (a refractive index of 1.68) was prepared as the first prism sheet 45, and the prism ridge lines 45a and the emission direction of the light source 41 were set to be orthogonal.

A sheet on which the light entrance surface of a base material layer with a thickness of 96 µm was formed as a mirror surface and prisms having an apex angle of 90° and a height of 12 µm were provided on the light emission surface (a refractive index of 1.67) was prepared as the second prism sheet 46, and the prism ridge lines 46a and the emission direction of the light source 41 were aligned.

Note that in the brightness evaluation of each sample sheet, instead of the edge light-type surface light-emitting unit 47 having the light source 41 provided on a side end of the light guide plate 43, a single-color surface light source (LED) having a light distribution characteristic (a light emission angle characteristic) and a brightness value similar to those of the surface light-emitting unit 47, and having a wavelength of 450 nm and an emission region of 10 mm × 10 mm, was used without deploying a reflective sheet.

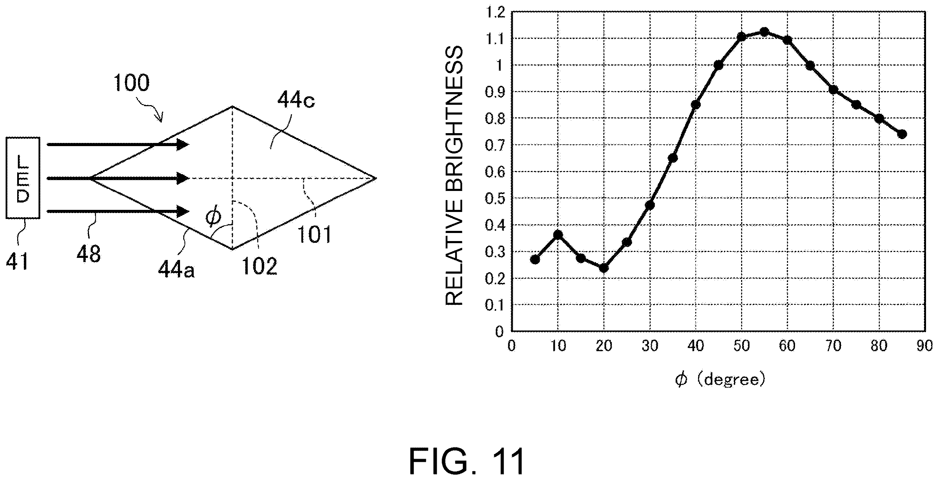

The sample sheets in each of which the angle *ϕ* shown in FIG. 6 was different were disposed in the backlight unit configuration described above, and the brightness upward in a vertical direction (a direction from the surface light source toward the display screen) was measured over a range of 8 mm × 8 mm using a two-dimensional spectrophotometer SR-5000 HS, manufactured by Topcon Technohouse Corp. Next, an average value of the brightness of all of the pixels was calculated in relation to a two-dimensional brightness distribution image obtained as a result. The results are shown in FIG. 11. Note that in FIG. 11, the brightness is indicated by a relative brightness based on an obtained value when *ϕ* is 45° (when the opening shape of the recess 44c is square). Furthermore, for reference, FIG. 11 shows the relationship between the planar configuration shown in FIG. 6 and the direction of travel of the light 48 emitted from the light source 41.

As shown in FIG. 11, compared with the brightness when *ϕ* was 45°, the brightness improved in a range of *ϕ* from 47.5° to 65° (a range in which the pairs of opposing corners of the quadrilateral shape serving as the opening shape of the recess 44c were 95° or more and 130° or less, respectively). More specifically, in a range of *ϕ* from 50° to 60° (a range in which the pairs of opposing corners of the quadrilateral shape serving as the opening shape of the recess 44c were 100° or more and 120° or less, respectively), the brightness improved by 10% or more as compared with the brightness when *ϕ* was 45°, and improved by 12% or more at the maximum brightness when *ϕ* was 55°.

### (Other Embodiments)

While an embodiment (including examples; the same applies hereinafter) of the present disclosure was described above, the present disclosure is not solely limited to the embodiment described above, and various modifications can be made within the scope of the disclosure. In other words, the foregoing description of the embodiment is illustrative in nature and is not intended to limit the present disclosure, its applications, or its uses.

### Industrial Applicability

According to the technology of the present disclosure, it is possible to provide a light-diffusing sheet capable of suppressing a reduction in brightness, and therefore the technology of the present disclosure is useful as a backlight unit, a liquid crystal display device, and an information apparatus using the light-diffusing sheet.

### Reference Signs List

- 1: TFT substrate
- 2: CF substrate
- 3: Liquid crystal layer
- 5: Liquid crystal display panel
- 6: First polarizing plate
- 7: Second polarizing plate
- 40: Backlight unit
- 41: Light source
- 42: Reflective sheet
- 43: Light guide plate
- 43a: Lenticular lens
- 44: Light-diffusing sheet
- 44a: Ridge line
- 44b: Prism ridge line
- 44c: Recess
- 44e: Center of recess
- 45: First prism sheet
- 45a: Prism ridge line
- 46: Second prism sheet
- 46a: Prism ridge line
- 46b: Protrusion
- 47: Surface light-emitting unit
- 48: Light
- 50: Liquid crystal display device
- 50a: Display screen
- 61: Base material layer
- 62: Inverted pyramid layer
- 63: Linear structure layer
- 64: Linear structure
- 65: Remaining portion
- 100: Rhombus
- 101: Long diagonal
- 102: Short diagonal

## Claims

1. A light-diffusing sheet, comprising:
a first surface that serves as a light emission surface; and
a second surface that serves as a light entrance surface,
wherein
a plurality of recesses having inverted substantially square pyramid shape is provided on one of the first surface and the second surface,
a plurality of linear structures extending in a predetermined direction is provided on the other of the first surface and the second surface, and
an opening shape of each of the plurality of recesses is a substantially quadrilateral shape having pairs of opposing corners of 95° or more and 130° or less, respectively.

2. The light-diffusing sheet according to claim 1, wherein
the pairs of corners are 100° or more and 120° or less, respectively.

3. The light-diffusing sheet according to claim 1, wherein
the substantially quadrilateral shape is substantially rhomboid.

4. The light-diffusing sheet according to claim 1, wherein
the plurality of linear structures form a prism, a hairline, a lenticular, or a diffraction grating.

5. A backlight unit, which is an edge light-type backlight unit incorporated into a liquid crystal display device in order to guide light emitted from a light source toward a display screen, comprising:
a light guide member, wherein the light source is provided on a side end of the light guide member; and
the light-diffusing sheet according to any one of claims 1 to 4, which is provided between the display screen and the light guide member,
wherein
the light-diffusing sheet is disposed such that the plurality of recesses face the display screen.

6. The backlight unit according to claim 5, wherein
the light guide member is disposed on a reflective member provided on an opposite side to the display screen as viewed from the light-diffusing sheet.

7. The backlight unit according to claim 5, wherein
the longer of two diagonals of the substantially quadrilateral shape and an emission direction of the light source are substantially parallel.

8. The backlight unit according to claim 5, wherein
an extension direction of the plurality of linear structures and an emission direction of the light source are substantially parallel.

9. The backlight unit according to claim 5, wherein
an angle formed by the longer of two diagonals of the substantially quadrilateral shape and an emission direction of the light source is 5° or more and 20° or less.

10. The backlight unit according to claim 5, wherein
an angle formed by an extension direction of the plurality of linear structures and an emission direction of the light source is 5° or more and 20° or less.

11. The backlight unit according to claim 5, wherein
a brightness-enhancing sheet is provided between the display screen and the light-diffusing sheet.

12. A liquid crystal display device, comprising:
the backlight unit according to claim 5; and
a liquid crystal display panel.

13. An information apparatus, comprising:
the liquid crystal display device according to claim 12.
